# EUROPEAN PATENT APPLICATION

(11) **EP 1 895 184 A2**
(43) Date of publication of application: **05.03.2008**
(21) Application number: 07253393.8
(22) Date of filing: 29.08.2007
(51) Int. Cl.: F16D 55/36, F16D 69/02

(54) **Aircraft brake using mixed carbon composite friction couple with different degrees of graphitization for improved rejected take off and wear performance**

(30) Priority: 29.08.2006 US 511433
(71) Applicant: Honeywell International Inc., Morristown, NJ 07960 (US)
(72) Inventor: Waghray, Akshay, Granger, IN 46530 (US); Walker, Terrence B., South Bend, IN 46619 (US)
(74) Representative: Hucker, Charlotte Jane

(57) **Abstract**

An improved aircraft brake system and method of manufacturing the same. The system comprises a rotatable wheel axle, a heat treated stationary carbon disc secured to the wheel axle and a rotating carbon disc heat treated to a temperature substantially higher than the heat treating temperature of the stationary carbon disc and rotatably supported relative to the wheel axle and arranged parallel to the stationary carbon disc. The method comprises heat treating the rotating and stationary carbon discs to different final temperatures prior to assembly of the aircraft brake system.

## Description

### FIELD OF THE INVENTION

This invention relates generally to aircraft brake systems and methods for production thereof. More specifically, the present invention relates to methods for improving torque performance by using heat treated rotating and stationary discs in the manufacture of aircraft brake systems.

### BACKGROUND OF THE INVENTION

In an aircraft, there are three basic modes of brake operation. Rejected take off (RTO) is the most severe brake operation. Aircraft multiple disc brakes are designed to achieve a given maximum stopping distance under any conditions. In many environments, especially for commercial aircraft, the brakes must be capable of producing sufficient torque to stop the airplane from high speed in a fixed maximum allowable distance, as in a rejected take-off.

There are essentially two types of aircraft brakes in service today. The first type is a steel brake. The second type is a carbon/carbon composite brake. Each aircraft brake type has a brake assembly typically comprising a hydraulic piston assembly, a torque tube, a torque plate, an integral wheel and alternating rotating (rotors) and stationary (stators) discs. The torque tube is typically made of steel or a titanium alloy. The wheel and hydraulic piston assembly are typically made of an aluminum alloy. Typical brakes have rotors, stators and backing and pressure plates made out of carbon/carbon composite. In this brake, the rotors and stators are the friction elements. Typically, a carbon/carbon composite is a composite of continuous carbon filaments embedded in a carbon matrix. The properties of the composite can vary widely depending on the processing and filament orientation.

Typically, the aircraft brake assembly is configured as follows. The torque tube has grooves on the outer diameter running longitudinally the length of the tube to a flange. Typically, a backing plate (flat disk having an outer and inner diameter) is first slid onto the torque tube outer diameter until contacting the flange. The rotors and stators are then slid onto the torque tube outer diameter. The rotors and stators are disks also having an inner and outer diameter. The rotors and the backing plate have no grooves on the inner diameter to engage the torque tube. The stators have grooves on the inner diameter which engage the torque tube.

A pressure plate (a disk having inner diameter grooves engaging the torque tube) is then slid onto the torque tube. A hydraulic piston assembly is attached on top of the pressure plate and is connected to the torque tube by inner diameter grooves or by bolting to the torque tube. The above assembly is then slid over a landing strut axle and the torque tube is mounted to the landing strut at the hydraulic piston assembly end.

The wheel is attached to the rotors of the above assembly, and is typically attached by rotor drive keys attached to the inner diameter of the wheel and which engage grooves on the outer diameter of the rotors. The wheel is mounted to the axle by bearings and thrust nuts.

Functionally, the rotors spin with the wheel until application of the piston to the pressure plate, wherein the rotors contact the stators. Upon rotor-stator contact, torque is created by friction between the rotors and stators. The torque is transmitted to the landing strut via the torque tube, thus slowing the wheel and aircraft. The rotor-stator contact results in wear of the rotors and stators and also in significant heat generation. The stack of rotors and stators are commonly referred to as the heat sink because this is the part of the brake that absorbs energy, converts it to heat and then dissipates it to the atmosphere.

### SUMMARY OF THE INVENTION

One of the objects of the present invention is to provide an improved aircraft brake system which improves torque and, thus, rejected take off performance. The present invention comprises one or more rotating carbon discs arranged generally parallel to a stationary carbon disc. Typically the stationary carbon disc is secured to a rotatable wheel axle. The rotating carbon disc is usually rotatably supported relative to the wheel axle, and is positioned parallel to the stationary disc.

An important feature of the invention is that the rotating and stationary discs have been exposed to a heat treatment to different final temperatures. The rotating carbon disc is heat treated to a temperature that is higher than the heat treating temperature of the stationary carbon disc. This provides improved thermal diffusivity and aircraft performance during brake operation, especially during rejected take offs.

### BRIEF DESCRIPTION OF THE DRAWINGS

The present invention will become more fully understood from the detailed description given herein below and the accompanying drawings. The drawings are not to scale, and are given by way of illustration only. Accordingly, the drawings should not be construed as limiting the present invention.

Figure 1 is a schematic axial side view of a portion of a brake arrangement in accordance with the present invention.

Figure 2 is a schematic illustration of a stationary carbon disc in accordance with the present invention.

Figure 3 is a schematic illustration of a rotating carbon disc in accordance with the present invention.

Figure 4 is a flowchart illustration of the method of manufacturing an aircraft brake system in accordance with the present invention.

Figure 5 is an illustration of the results of experimental analysis on brake wear reduction conducted in accordance with the present invention. (RIHTT: rotor initial high temperature treatment; RMMT: rotor maximum matrix temperature; SIHTT: stator initial heat treatment temperature; SMMT: stator maximum matrix temperature).

Figure 6 is an illustration of the results of experimental analysis on friction performance and brake effectiveness in accordance with the present invention. (RIHTT: rotor initial high temperature treatment; RMMT: rotor maximum matrix temperature; SIHTT: stator initial heat treatment temperature; SMMT: stator maximum matrix temperature).

### DETAILED DESCRIPTION OF THE INVENTION

The present invention is directed to an improved aircraft brake system wherein differential heat treatment of the rotating and stationary disc or discs provides improved thermal diffusivity, torque, and RTO performance. The present invention is also directed to a method for producing the aforementioned improved aircraft brake system.

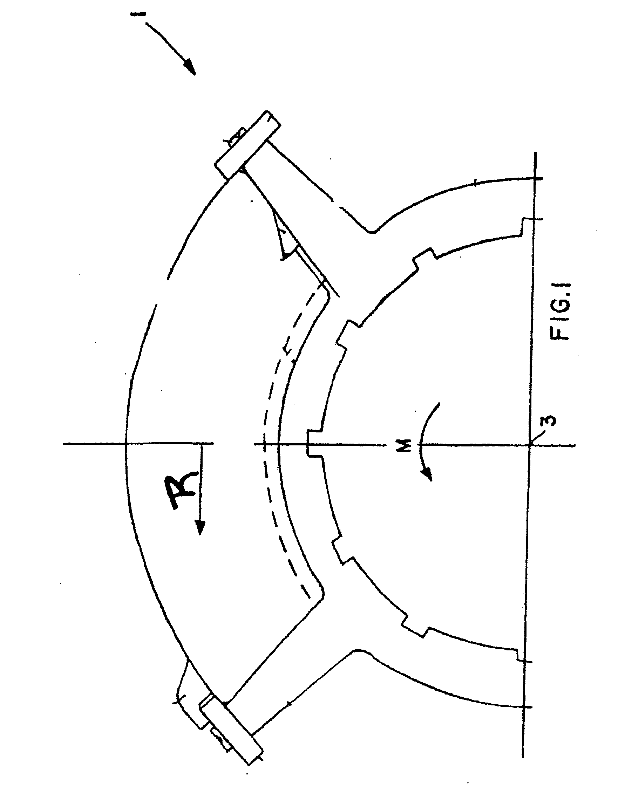

FIG. 1 shows one embodiment of the brake system of the present invention. The brake system comprises one or more stator or stationary disc 1, such as a composite or carbon/carbon disc, secured onto a wheel axle 3, which rotates as shown by the arrow M together with the respective associated aircraft landing gear wheel that is carried by wheel axle 3. One or more rotor or rotating disc 2 (not shown) such as a composite or carbon/carbon disc is movably or rotatably supported relative to the wheel axle 3, so that the rotating brake disk 2 can rotate relative to the wheel axle 3, or vice versa.

In general, it can be said that one set of the brake disks rotates together with the rotating wheel that is to be braked, and the other set of brake disks remains relatively stationary with respect to the vehicle, for example by being fixed to a non-rotating frame member of the vehicle. The respective stationary carbon brake disks 1 and rotating carbon brake disks 2 of the vehicle brake system are all arranged parallel to one another, i.e. the major brake disk surfaces of the brake disks extending radially relative to the axis of the wheel axle 3 are all parallel to one another. As a result of the relative rotation M, a frictional force R is generated respectively between the rotating brake disks 2 and the brake pads of the stationary brake disks 1 when the braking force is applied thereto in the axial direction.

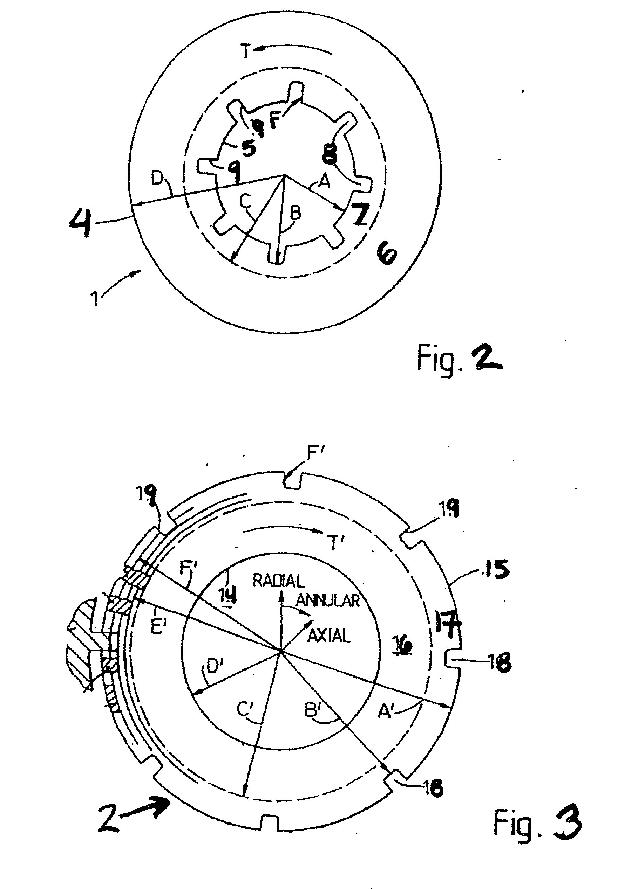

FIG. 2 shows stationary carbon disc 1 in more detail. Stationary disc 1 has an outer disc periphery 4 of radius D and an inner disc periphery 5 of radius A. A radially outer friction region 6 extends between the disc outer periphery 4 of radius D and radius C, and a radially inner drive region 7 extends between radius C and inner disc periphery 5 of radius A. A plurality of circumferentially spaced apart keyways 8 are formed in the drive region 7 and these extend radially outwardly from the inner disc periphery 5 of radius A to drive radius B of the drive region 7. The annular portion of the drive region 7 having radii B and C may be recessed, for example to clearly define the radially inner limit of the friction region 6.

FIG. 3 illustrates a rotating carbon disc 2, which is of complementary form to the stationary disc 1 shown in FIG. 2 and which in use is axially adjacent thereto. The rotating disc 2 has a radially inner friction region 16 defined by the inner disc periphery 14 of radius D' and radius C', and a radially outer drive region 17 defined by outer disc periphery 15 of radius A' and radius C'. Circumferentially spaced apart keyways 18 are provided in the drive region 14 which extend radially inwardly from the outer disc periphery 15 to drive radius B' of the drive region 17.

The stationary carbon disc 1 is subject to a torque T in its friction region 6 caused by frictional contact of its axial side face shown in plan view with the axial side face of adjacent rotating carbon disc 2, i.e. friction region 6 is in frictional engagement with friction region 16. Consequently, rotating carbon disc 2 is subject to an equal and opposite torque T' in its friction region 16. In the stationary carbon disc 1 the torque T is balanced by the reaction force F applied to keyways 8 by splines of a torque tube of a brake disc assembly (not shown) of which stationary disc 1 and rotating disc 2 form part of. Similarly, in the rotating disc 2 the torque T' is balanced by the reaction force F' applied to the keyways 18 by drives of an aircraft wheel (not shown) which rotates about the torque tube or hub of the brake assembly.

Clearly, the friction regions 6 and 16 of discs 1 and 2, respectively, must be able to withstand the respective torque loadings T and T' as well as provide adequate frictional characteristics at their exposed axial side faces and suitable heat dissipation characteristics in their sub-surface structure. Also, the drive regions 6 and 16 must be able to withstand the contact forces F and F' immediately adjacent the point of loading at leading edges 9 and 19 of the keyways 8 and 18, respectively.

In order to improve the aircraft torque and wear performance, the aircraft brake system of the present invention comprises heat treating the stationary carbon disc(s) and the rotating carbon disc(s) to different final temperatures, with the rotating carbon disc(s) heated to a temperature higher than the heat treating temperature of the stationary carbon disc(s). The higher rotor heat treating temperature results in higher RTO torque values and improved performance.

The Stationary disc(s) should not be heated to temperatures higher than 2000°C. since this could result in reduction of lug-strength. Heat treating the rotating brake disc(s) to a higher temperature than the stationary brake disc(s) results in increased thermal diffusivity of the rotors which improves heat transfer, RTO and wear performance. The heat treatment can be performed by the methods of heat treating carbon-carbon composite discs that are generally known in the art for heat treating to temperatures of 1000°C - 3000°C.

In one embodiment of the present invention, the aircraft brake system comprises one or more stationary carbon discs heated to a temperature of about at least 1600°C and one or more rotating carbon discs heated to a temperature approximately 200°C - 600°C higher than the heat treating temperature of the stationary carbon disc(s).

In another embodiment of the present invention, the aircraft brake system comprises one or more stationary carbon discs heated to a temperature of about 1600°C-2000°C and one or more rotating carbon disc heated to a temperature of about 1900°C-2540°C. In a preferred embodiment of the present invention, the aircraft brake system comprises one or more stationary carbon disc heated to a temperature of about 1800°C and one or more rotating carbon disc heated to a temperature of about 2100°C.

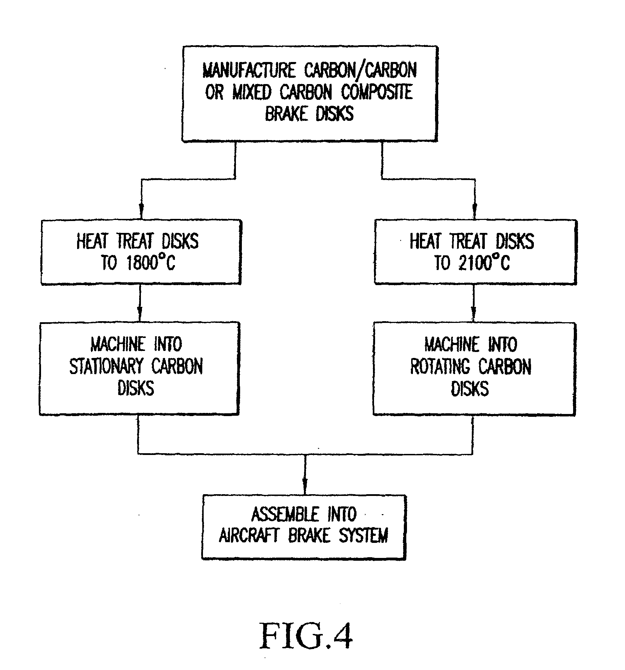

FIG. 4 illustrates the inventive method for manufacturing an aircraft brake system of the present invention. After individual carbon/carbon or mixed carbon composite brake discs are manufactured according to methods known in the art, the discs are separately heat treated to different final temperatures, wherein some discs are heat treated to a temperature substantially higher than the heat treating temperature of the others. After heat treatment, the discs heated to a lower temperature are machined into stationary carbon discs, while the discs heated to a higher temperature are machined into rotating carbon discs. The stationary and rotating carbon discs are assembled into an aircraft brake system as previously described in reference to FIG. 1.

In one embodiment of the present invention, the at least one stationary carbon disc is heat treated to a temperature of at least 1600°C while the at least one rotating carbon disc is heated to a temperature about 200°C to 600°C above the stationary disc before the aircraft brake system is assembled. Final machining is preferably done after the heat treatment due to dimensional changes that may occur during heat treatment.

Preferably, the process of the instant invention is conducted at a heat treating temperature of approximately 1600°C-2000°C for the stationary carbon disc and approximately 1800°C-2540°C for the rotating carbon disc, and most preferably approximately 1800°C and 2100°C respectively.

The present invention also embodies a method of improving aircraft torque and wear performance by providing a brake system as previously described and increasing the thermal diffusivity of the rotating carbon disc of the brake system. In one embodiment of the instant invention, the thermal diffusivity of the rotating carbon disc is increased by heat treating the rotating disc to a temperature substantially higher than the heat treating temperature of the stationary disc.

**Carbon discs.** The carbon discs may be any carbon discs that are known in the art to be suitable for brake applications. Preferred are carbon discs that comprise carbon carbon-carbon composites. Any carbon-carbon composites that are known in the art to be suitable for brake applications can be used with this invention.

Carbon-carbon composites are generally made of fibers, and carbonaceous polymers and hydrocarbons as the matrix. Carbon-carbon composites and methods of their manufacture are well known to those in the art. Carbon-carbon composites are described in Carbon-Carbon Materials and Composites, John D. Buckley and Dan D. Edie, Noyes Publications, 1993, which is incorporated herein by reference in its entirety. The carbon-carbon composites of the present invention can be made with thermosetting resins as matrix precursors. These materials generally possess low densities 1.55-1.75 g/cm³ and have well-distributed microporosity. Composites made with resins as the matrix generally exhibit high flexural strength, low toughness, and low thermal conductivity.

The carbon-carbon composites of the present invention can also be made with pitch as the matrix precursor. These materials, after densification, can exhibit densities in the range of 1.7-2.0 g/cm³ with some mesopores. The carbon-carbon composites of the present invention can also be made by chemical vapor deposition (CVD). This technique uses hydrocarbon gases, and the carbon-carbon composites that are produced possess intermediate densities, and have matrices with closed porosities. Composites with pitch as the precursor, and the CVD-based composites, can be made with very high thermal conductivity (400-700 W/MK) in the fiber direction.

In one preferred embodiment, the carbon-carbon composites of the present invention are prepared from carbon preforms. Carbon preforms are made of carbon fibers, which can be formed from pre-oxidized acrylonitrile resin. The carbon fibers can be layered together to form a shape, such as a friction brake annular disc. The shape is heated and infiltrated with methane, or another pyrolyzable carbon source, to form the carbon-carbon composite. A carbon-carbon composite prepared in this manner will have a density in the range of about 1.6 g/cm³ to about 1.9 g/cm³. More highly preferred is a carbon-carbon composite with a density of approximately 1.75 g/cm³. Carbon preforms suitable for use with this invention are described for example in U.S. Patent No. 5,882,781 to Lawton et al., and U.S. Patent No. 6,691,393 to James et al., both of which are incorporated herein by reference in their entireties.

One highly preferred carbon-carbon composite is CARBENIX^{®} 4100. This carbon/carbon composite material is manufactured by Honeywell International, Inc. as an aircraft brake carbon/carbon composite friction material. Another highly preferred carbon-carbon composite is CARBENIX^{®} 4000, also manufactured by Honeywell International, Inc. CARBENIX^{®} 4000 is an aircraft brake carbon/carbon composite friction material, consisting of polyacrylonitrile (PAN) based carbon fibers, densified with pyrocarbon from chemical vapor deposition.

**Heat treatment**. The heat treatment may be performed by methods generally known in the art. No special furnaces or heating regimes are required. The furnaces may be heated using induction coils or resistance heating elements. Generally the composites are heat treated in a furnace under an inert gas. The carbon-carbon composite is first placed into the furnace and then the furnace is ramped up to the designated temperature at a maximum rate of 150 °C/hour. The composite is then held at the designated temperature for approximately 4 hours at which point the furnace is cooled to below 200°C, and the sample is removed and returned to room temperature.

**Thermal Diffusivity.** The thermal diffusivity is the thermal conductivity of a substance divided by the product of its density and its specific heat capacity. For carbon discs the measurement is typically made in the axial direction. For a 2000 °C final heat treatment for the rotating disc versus 1800 °C final treatment for the stationary disc, the difference in thickness (axial) thermal diffusivity between the rotating carbon disc and the stationary carbon disc should be at least about 0.05 cm²/sec and preferably about 0.10 cm²/sec. As the final heat treatment temperature increases, the differences will be correspondingly much larger.

### EXAMPLE

A four-factor, two-level, half-factorial test was designed and three replicates were completed. The four test factors were the rotor initial and final heat treating temperatures and the stator initial and final heat treating temperatures. The carbon-carbon composite preforms were prepared as described in U.S. Patent No. 5,882,781 to Lawton et al. The initial heat temperatures used were 1600°C and 2540°C. Some samples were heat treated to a final temperature (or maximum matrix temperature) of 2540°C whereas others were not heat treated at all. Samples were machined from material with the correct heat treat temperatures and were tested on a subscale 12" dynamometer. Using the dynamometer, friction and wear properties were measured for each combination of disks.

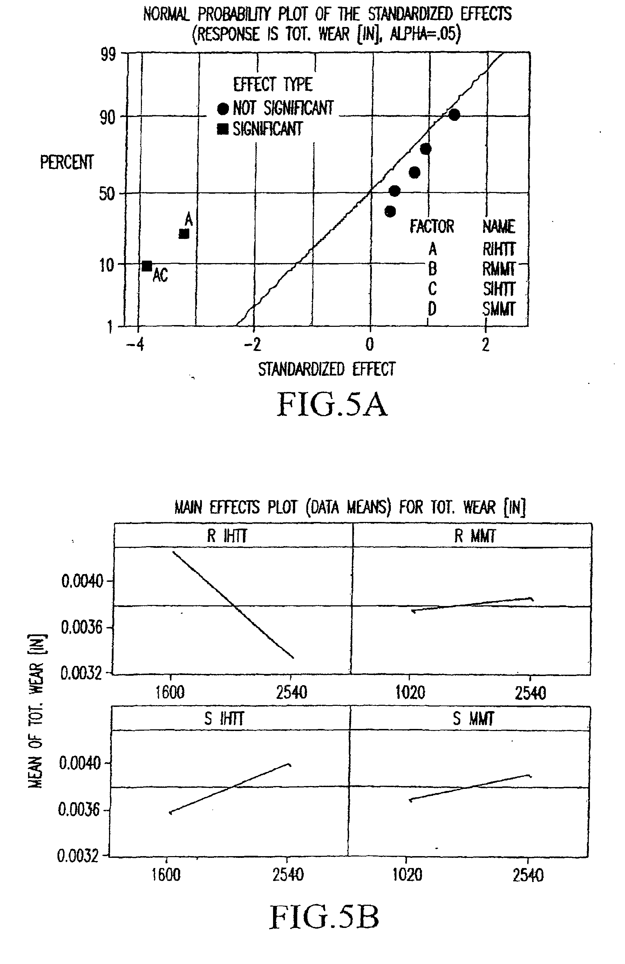

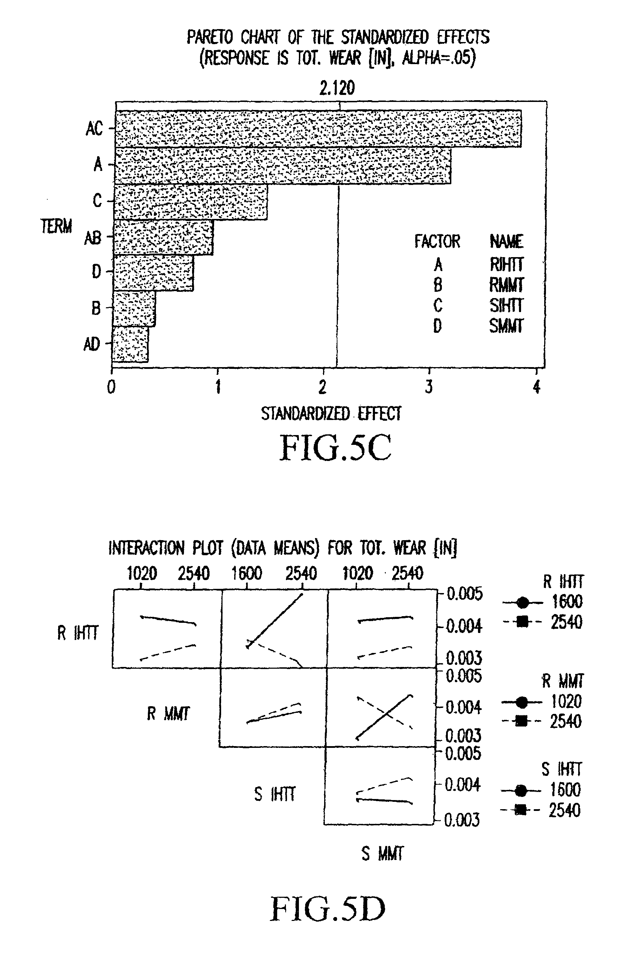

Table 1 and Figures 5A-D show the results of brake wear analysis in accordance with the present invention. In Figure 5 the following acronyms are used: rotor initial high temperature treatment (RIHTT); rotor maximum matrix temperature (RMMT); stator initial heat treatment temperature (SIHTT); and stator maximum matrix temperature (SMMT). The rotor is the rotating carbon disc and the stator is the stationary carbon disc.

For wear, the most significant factor according to a Pareto analysis was the combination of the initial heat treat temperatures of both the rotor and the stator. In particular, as can be seen from the Interaction Plot of Figure 5D, the lowest possible wear is achieved when combining a high initial heat treating temperature for both the rotor and the stator. Additionally, the lowest overall wear is achieved when combining a non-mixed couple with a high initial heat treating temperature and low final heat treating temperature.

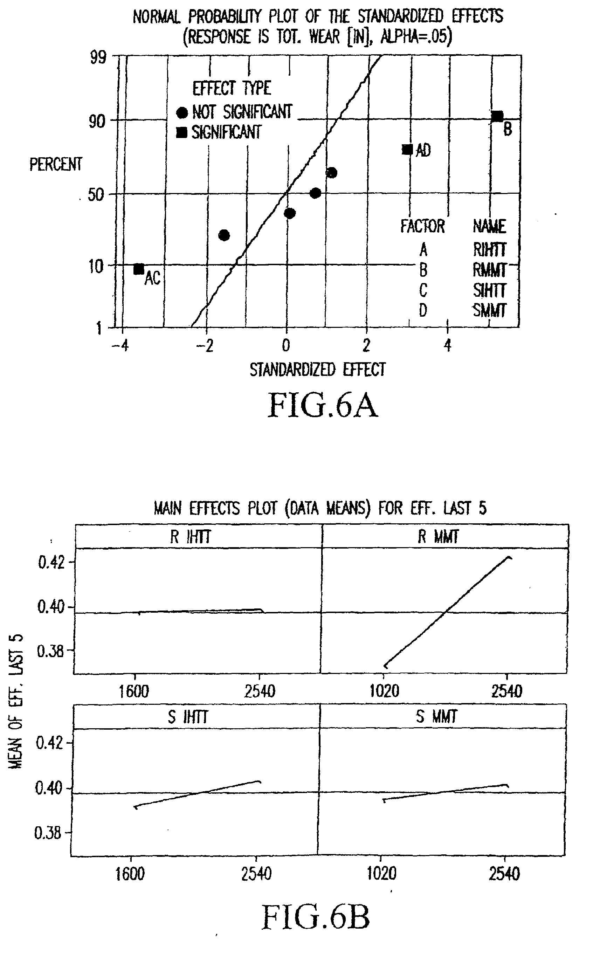

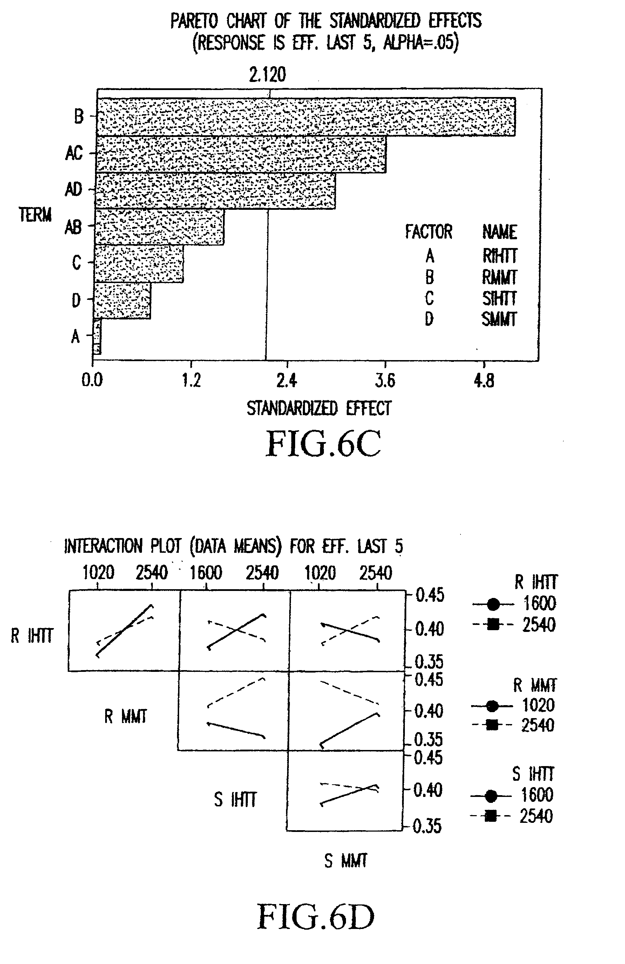

Table 1 and Figures 6A-D show the results of friction performance and brake effectiveness testing done in materials treated in accordance with the present invention. In Figure 6 the following acronyms are used: rotor initial high temperature treatment (RIHTT); rotor maximum matrix temperature (RMMT); stator initial heat treatment temperature (SIHTT); and stator maximum matrix temperature (SMMT).

For effectiveness, the most significant factor according to a Pareto analysis was the rotor final heat treating temperature. In particular, as seen in the Main Effects Plot of Figure 6B, as rotor final heat treating temperature increases, effectiveness increases as well. Additional significant factors were the combination of the rotor and stator initial heat treating temperatures and the combination of the rotor initial heat treat temperature and the stator maximum matrix temperature. The data that was used in Figures 5 and 6 is shown in Table 1.

**Table 1. The results of brake wear analysis, friction performance, and brake effectiveness testing. (RIHTT: rotor initial high temperature treatment; RMMT: rotor maximum matrix temperature; SIHTT: stator initial heat treatment temperature; and SMMT: stator maximum matrix temperature.)**

| R IHTT | R MMTS | IHTT S | MMT R | Wear [in] | S Wear [in] | Tot. Wear [in] | Ave. Eff. (100) | Eff. Last 50 | Eff Last 25 | Eff. Last 5 |
|---|---|---|---|---|---|---|---|---|---|---|
| 1600 | 1020 | 1600 | 1020 | 0.0017 | 0.0018 | 0.0035 | 0.337 | 0.329 | 0.326 | 0.325 |
| 2540 | 1020 | 1600 | 2540 | 0.0017 | 0.002 | 0.0038 | 0.412 | 0.388 | 0.378 | 0.38 |
| 1600 | 2540 | 1600 | 2540 | 0.0018 | 0.002 | 0.0038 | 0.419 | 0.413 | 0.414 | 0.412 |
| 2540 | 2540 | 1600 | 1020 | 0.0002 | 0.0036 | 0.0038 | 0.403 | 0.401 | 0.402 | 0.403 |
| 1600 | 1020 | 2540 | 2540 | 0.0027 | 0.0007 | 0.0034 | 0.392 | 0.37 | 0.363 | 0.36 |
| 2540 | 1020 | 2540 | 1020 | 0.0012 | 0.0018 | 0.003 | 0.374 | 0.363 | 0.352 | 0.341 |
| 1600 | 2540 | 2540 | 1020 | 0.0005 | 0.004 | 0.0046 | 0.472 | 0.486 | 0.479 | 0.473 |
| 2540 | 2540 | 2540 | 2540 | 0.0015 | 0.0014 | 0.0029 | 0.406 | 0.405 | 0.408 | 0.41 |
| 1600 | 1020 | 1600 | 1020 | 0.0017 | 0.0017 | 0.0034 | 0.345 | 0.341 | 0.339 | 0.337 |
| 2540 | 1020 | 1600 | 2540 | 0.0027 | 0.0002 | 0.003 | 0.434 | 0.428 | 0.429 | 0.424 |
| 1600 | 2540 | 1600 | 2540 | 0.0018 | 0.001 | 0.0028 | 0.413 | 0.4 | 0.401 | 0.383 |
| 2540 | 2540 | 1600 | 1020 | 0.0003 | 0.0039 | 0.0042 | 0.442 | 0.441 | 0.438 | 0.432 |
| 1600 | 1020 | 2540 | 2540 | 0.0058 | 0.0002 | 0.0061 | 0.431 | 0.419 | 0.4 | 0.379 |
| 2540 | 1020 | 2540 | 1020 | 0.0013 | 0.0012 | 0.0025 | 0.368 | 0.364 | 0.363 | 0.365 |
| 1600 | 2540 | 2540 | 1020 | 0.0006 | 0.0047 | 0.0053 | 0.41 | 0.416 | 0.425 | 0.434 |
| 2540 | 2540 | 2540 | 2540 | 0.0014 | 0.0027 | 0.0041 | 0.396 | 0.39 | 0.393 | 0.403 |
| 1600 | 1020 | 1600 | 1020 | 0.0017 | 0.0019 | 0.0036 | 0.399 | 0.395 | 0.395 | 0.396 |
| 2540 | 1020 | 1600 | 2540 | 0.0036 | 0.0005 | 0.0041 | 0.449 | 0.441 | 0.437 | 0.428 |
| 1600 | 2540 | 1600 | 2540 | 0.0017 | 0.0021 | 0.0038 | 0.409 | 0.404 | 0.403 | 0.394 |
| 2540 | 2540 | 1600 | 1020 | 0.0009 | 0.0022 | 0.0031 | 0.391 | 0.391 | 0.393 | 0.394 |
| 1600 | 1020 | 2540 | 2540 | 0.0056 | 0.0004 | 0.0059 | 0.402 | 0.393 | 0.39 | 0.39 |
| 2540 | 1020 | 2540 | 1020 | 0.001 | 0.0014 | 0.0024 | 0.374 | 0.359 | 0.351 | 0.346 |
| 1600 | 2540 | 2540 | 1020 | 0.0003 | 0.0044 | 0.0047 | 0.467 | 0.484 | 0.488 | 0.486 |
| 2540 | 2540 | 2540 | 2540 | 0.0014 | 0.0016 | 0.003 | 0.447 | 0.448 | 0.451 | 0.451 |

The present invention has been described herein in terms of preferred embodiments. However, obvious modifications and additions to the invention will be apparent to those skilled in the relevant art upon reading the foregoing description. It is intended that all such modifications and additions form a part of the present invention.

## Claims

1. An aircraft brake system comprising:
one or more stationary carbon discs; and
one or more rotating carbon discs positioned generally parallel to the stationary carbon discs;
wherein the one or more stationary carbon discs and the one or more rotating discs have been heat treated;
and further wherein the one or more rotating carbon discs have been heat treated to a temperature that is higher than the heat treating temperature of the one or more stationary carbon discs.

2. The aircraft brake system of claim 1, wherein the one or more stationary carbon discs have been heat treated to a temperature of at least about 1600°C.

3. The aircraft brake system of claim 1, wherein the one or more rotating carbon discs have been heat treated to a temperature about 200°C - 600°C higher than the heat treating temperature of the one or more stationary carbon discs.

4. The aircraft brake system of claim 1, wherein the one or more rotating carbon discs have been heat treated to a temperature of about 1900°C - 2540°C.

5. The aircraft brake system of claim 1, wherein the carbon discs comprise carbon-carbon composite.

6. The aircraft brake system of claim 1, wherein the carbon discs comprise carbon-carbon composite;
and further wherein the one or more stationary carbon discs have been heat treated to a temperature of at least about 1600°C, and the one or more rotating carbon discs have been heat treated to a temperature of about 1800°C - 2200°C.

7. A method of manufacturing an aircraft brake system that includes rotating and stationary carbon discs, the method comprising:
providing two or more carbon discs;
heat treating the two or more carbon discs, wherein the heat treating temperature of at least one of the carbon discs is at a temperature that is higher than the heat treating temperature of the remaining carbon discs;
rotatably supporting the one or more carbon discs that have been heat treated at the higher temperature in a position that is generally parallel to the one or more discs that have been heat treated at the lower temperature; and
securing to a wheel axle in a stationary position, the one or more carbon discs that have been heat treated at the lower temperature.

8. The method of manufacturing an aircraft brake system of claim 7, wherein the higher heat treating temperature is about 200°C - 600°C higher than the lower heat treating temperature.

9. The method of manufacturing an aircraft brake system of claim 7, wherein the lower heat treating temperature is about 1600°C, and the higher heat treating temperature is about 1800°C - 2200°C.

10. The method of manufacturing an aircraft brake system of claim 7, wherein the carbon discs comprise carbon-carbon composite.
